# EUROPEAN PATENT APPLICATION

(11) **EP 4 693 639 A1**
(43) Date of publication of application: **11.02.2026**
(21) Application number: 24779098.3
(22) Date of filing: 04.03.2024
(51) Int. Cl.: H01M 50/152, H01M 10/04, H01M 10/0587, H01M 50/107, H01M 50/167, H01M 50/179, H01M 50/184, H01M 50/342, H01M 50/545, H01M 50/559

(54) **CYLINDRICAL BATTERY**

(30) Priority: 24.03.2023 JP 2023047695
(71) Applicant: Panasonic Energy Co., Ltd., Osaka 570-8511 (JP)
(72) Inventor: OKUTANI, Oose, Osaka 571-0057 (JP)
(74) Representative: Eisenführ Speiser
(86) International application number: PCT/JP2024/007948
(87) International publication number: WO 2024/202960

(57) **Abstract**

This cylindrical battery (10) is provided with: a bottomed cylindrical exterior can (16) that accommodates an electrode body (14); and a sealing body (17) that is crimped and secured to an opening of the exterior can (16) with a gasket (28) therebetween. The external can (16) has thin-walled easily-breakable sections (70) on a bottom (68) thereof, and the sealing body (17) has a terminal cap (27) for sealing the opening of the external can (16). The terminal cap (27) has a tapered part (27c) that protrudes toward the electrode body (14) and becomes tapered toward a hollow space (14a) of the electrode body (14). A tip (53) of the tapered part (27c) is positioned closer to the electrode body (14) than a part of the sealing body (17) other than the tapered part (27c).

## Description

### TECHNICAL FIELD

The present disclosure relates to a cylindrical battery.

### BACKGROUND ART

As a cylindrical battery, there has been conventionally one disclosed in PATENT LITERATURE 1. This cylindrical battery comprises an electrode assembly, a bottomed cylindrical exterior housing can that houses the electrode assembly, and a sealing assembly with which an opening portion of the exterior housing can is capped. The sealing assembly includes a terminal cap having a vent hole, a terminal plate having a discharge hole, and a first safety vent that is interposed between the terminal cap and the terminal plate and seals an interior of a battery. A second safety vent is provided in a bottom portion of the exterior housing can. The second safety vent operates when a thin easily rupturable portion provided in the bottom portion of the exterior housing can ruptures. Since it is difficult to provide a large discharge hole in the sealing assembly, the second safety vent is provided together with the first safety vent to improve the capability to discharge gas generated inside the battery.

### CITATION LIST

### PATENT LITERATURE

PATENT LITERATURE 1: Japanese Unexamined Patent Application Publication No. Hei 6-333548

### SUMMARY

In the above-described cylindrical battery, gas flowing out from an end surface on the sealing assembly side of the electrode assembly remains in corner portions of each member included in the sealing assembly, or a gap between the members, which may prevent the safety vent in the bottom portion of the exterior housing can from operating smoothly. Since the internal pressure increases when heat is abnormally generated, if the strength of the sealing assembly is insufficient, the sealing assembly is deflected, making it difficult for high-temperature gas to smoothly flow to the bottom portion side, which may prevent the safety vent from operating smoothly.

Therefore, even if a safety vent having a large discharge area is provided in the bottom portion of the exterior housing can, the capability to discharge gas generated inside the battery cannot be sufficiently improved. Then, an object of the present disclosure is to provide a cylindrical battery in which a safety vent provided in a bottom portion of an exterior housing can operates smoothly.

In order to solve the above-described problem, a cylindrical battery according to the present disclosure comprises an electrode assembly in which a positive electrode and a negative electrode are wound with a separator interposed between the positive electrode and the negative electrode, a bottomed cylindrical exterior housing can that houses the electrode assembly, and a sealing assembly that is fixed by crimping to an opening portion of the exterior housing can via a gasket, in which the exterior housing can has a thin easily rupturable portion provided in a bottom portion, the sealing assembly has a terminal cap that seals an opening of the exterior housing can, the terminal cap has a tapered portion that projects toward the electrode assembly side and is tapered toward a hollow portion of the electrode assembly, and a tip of the tapered portion is located closer to the electrode assembly side than a portion other than the tapered portion in the sealing assembly.

According to the cylindrical battery according to the present disclosure, the safety vent provided in the bottom portion of the exterior housing can may operate smoothly.

### BRIEF DESCRIPTION OF DRAWING

FIG. 1 is an axial sectional view of a cylindrical battery according to one embodiment of the present disclosure.
FIG. 2 is a perspective view of a terminal cap when viewed from obliquely from the upper side.
FIG. 3 is a plan view of the terminal cap when viewed from the lower side in an axial direction.
FIG. 4 is an enlarged sectional view of an upper end portion in the axial direction in FIG. 1.
FIG. 5 is a plan view corresponding to FIG. 3 in a cylindrical battery of a first modified example.
FIG. 6 is a plan view corresponding to FIG. 3 in a cylindrical battery of a second modified example.
FIG. 7 is a plan view corresponding to FIG. 3 in a cylindrical battery of a third modified example.

### DESCRIPTION OF EMBODIMENTS

Hereinafter, embodiments of a cylindrical battery according to the present disclosure will be described in detail with reference to the drawings. Note that the cylindrical battery of the present disclosure may be a primary battery, or may be a secondary battery. Additionally, the cylindrical battery may be a battery using an aqueous electrolyte, or may be a battery using a non-aqueous electrolyte. In the following, a non-aqueous electrolyte secondary battery (lithium ion battery) using a non-aqueous electrolyte will be exemplified as a cylindrical battery 10 of an embodiment, but the cylindrical battery of the present disclosure is not limited to this.

In a case where a plurality of embodiments, modified examples and the like are included in the following, it is assumed from the beginning that a new embodiment is constructed by appropriately combining those feature portions. In the following embodiments, the same components are denoted by the same reference numerals in the drawings and duplicate descriptions are omitted. Schematic diagrams are included in a plurality of drawings, and the dimensional ratios such as lengths, widths and heights of each member between different drawings are not necessarily the same. In the present specification, a sealing assembly 17 side in an axial direction (height direction) of the cylindrical battery 10 is defined as "up", and a bottom portion 68 side of an exterior housing can 16 in the axial direction is defined as "lower". Of the components described below, components that are not described in the independent claim indicating the highest level concept are optional components, and are not essential components.

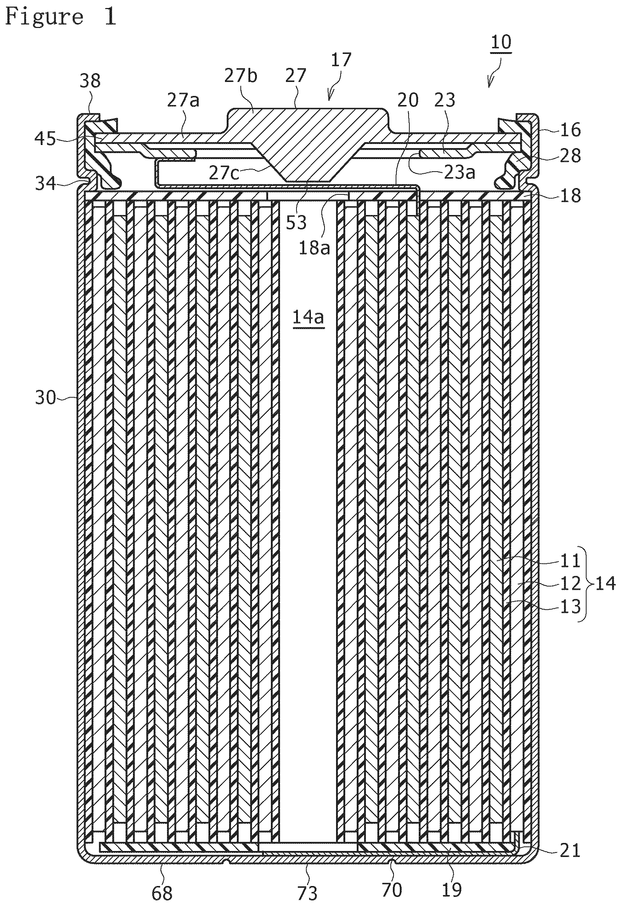

FIG. 1 is an axial sectional view of the cylindrical battery 10 according to one embodiment of the present disclosure. As illustrated in FIG. 1, the cylindrical battery (hereinafter, simply referred to as a battery) 10 comprises a wound-type electrode assembly 14, a non-aqueous electrolyte (not illustrated), the bottomed cylindrical metallic exterior housing can 16 that houses the electrode assembly 14 and the non-aqueous electrolyte, and the sealing assembly 17 with which an opening of the exterior housing can 16 is capped. The electrode assembly 14 has a wound structure in which a long positive electrode 11 and a long negative electrode 12 are wound with two long separators 13 each interposed therebetween. The electrode assembly 14 includes, in a radial center portion, a hollow portion 14a extending axially from an upper end to a lower end in the axial direction.

The negative electrode 12 is formed to be one size larger than the positive electrode 11 in order to prevent precipitation of lithium. That is, the negative electrode 12 is formed to be longer in the longitudinal direction and the width direction (short direction) than the positive electrode 11. The two separators 13 are each formed to be at least one size larger than the positive electrode 11, and are disposed so as to interpose the positive electrode 11 therebetween, for example. The negative electrode 12 may include a winding start side end of the electrode assembly 14. However, the separator 13 generally extends beyond the winding start side end of the negative electrode 12, and a winding start side end of the separator 13 becomes a winding start end of the electrode assembly 14.

The non-aqueous electrolyte includes a non-aqueous solvent, and an electrolyte salt dissolved in the non-aqueous solvent. For the non-aqueous solvent, esters, ethers, nitriles, amides, and mixed solvents containing two or more selected from the foregoing may be used, for example. The non-aqueous solvent may contain a halogen-substituted product obtained by substituting at least some of hydrogen atoms in these solvents with a halogen atom such as fluorine. Note that the non-aqueous electrolyte is not limited to a liquid electrolyte, and may be a solid-state electrolyte using a gel-like polymer or the like. For the electrolyte salt, a lithium salt such as LiPF₆ is used.

The positive electrode 11 has a positive electrode current collector and a positive electrode mixture layer formed on each surface of the positive electrode current collector. For the positive electrode current collector, a foil of a metal, such as aluminum or an aluminum alloy, which is stable within a potential range of the positive electrode 11, a film in which such a metal is disposed on a surface layer thereof, or the like may be used. The positive electrode mixture layer includes a positive electrode active material, a conductive agent, and a binder. The positive electrode 11 may be produced by, for example, applying a positive electrode mixture slurry including the positive electrode active material, the conductive agent, the binder and the like on the positive electrode current collector, and drying and then compressing the resulting coating film to form a positive electrode mixture layer on each surface of the positive electrode current collector.

The positive electrode active material may include a lithium-containing metal composite oxide as a main component. Examples of metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, and W. An example of a preferable lithium-containing metal composite oxide is a composite oxide containing at least one of the group of Ni, Co, Mn, and Al.

Examples of the conductive agent included in the positive electrode mixture layer include carbon materials such as carbon black, acetylene black, Ketjenblack, and graphite. Examples of the binder included in the positive electrode mixture layer include fluororesins such as polytetrafluoroethylene (PTFE) and polyvinylidene fluoride (PVdF), polyacrylonitrile (PAN), a polyimide resin, an acrylic resin, and a polyolefin resin. These resins may be used in combination with cellulose derivatives such as carboxymethyl cellulose (CMC) or salts thereof, polyethylene oxide (PEO), or the like.

The negative electrode 12 has a negative electrode current collector and a negative electrode mixture layer formed on each surface of the negative electrode current collector. For the negative electrode current collector, a foil of a metal, such as copper or a copper alloy, which is stable within a potential range of the negative electrode 12, a film in which such a metal is disposed on a surface layer thereof, or the like may be used. The negative electrode mixture layer includes a negative electrode active material, and a binder. The negative electrode 12 may be produced by, for example, applying a negative electrode mixture slurry including the negative electrode active material, the binder and the like on the negative electrode current collector, and drying and then compressing the resulting coating film to form a negative electrode mixture layer on each surface of the negative electrode current collector.

For the negative electrode active material, a carbon material that reversibly occludes and releases lithium ions is generally used. A preferable carbon material is graphite such as natural graphite such as flaky graphite, lump graphite, and earthy graphite, and artificial graphite such as lump artificial graphite and graphitized mesophase carbon microbeads. The negative electrode mixture layer may include a silicon (Si)-containing Si material as the negative electrode active material. For the negative electrode active material, a metal alloyed with lithium other than Si, an alloy containing such a metal, a compound containing such a metal, or the like may be used.

For the binder included in the negative electrode mixture layer, a fluororesin, PAN, a polyimide resin, an acrylic resin, a polyolefin resin, or the like may be used like the case of the positive electrode 11, and a styrene-butadiene rubber (SBR) or a modification thereof is preferably used. For the negative electrode mixture layer, for example, in addition to SBR and the like, CMC or the salts thereof, polyacrylic acid (PAA) or the salts thereof, polyvinyl alcohol, or the like may be included.

For each separator 13, a porous sheet having ion permeability and an insulation property is used. Specific examples of the porous sheet include a microporous thin film, a woven fabric, and a nonwoven fabric. As a material for the separator 13, a polyolefin resin such as polyethylene or polypropylene, or a cellulose is preferable.
The separator 13 may have either a single-layer structure or a multi-layer structure. A heat-resistant layer or the like may be formed on a surface of the separator 13.

As illustrated in FIG. 1, a positive electrode lead 20 is joined to the positive electrode 11, and a negative electrode lead 21 is joined to a winding finish side of the negative electrode 12 in the longitudinal direction. The battery 10 has an upper insulating plate 18 located above the electrode assembly 14, and has a lower insulating plate 19 located below the electrode assembly 14. The positive electrode lead 20 extends toward the sealing assembly 17 side through a through hole in the upper insulating plate 18, and the negative electrode lead 21 extends toward the bottom portion 68 side of the exterior housing can 16 through the outside of the lower insulating plate 19. The positive electrode lead 20 is connected to a lower surface of a terminal plate 23 of the sealing assembly 17 by means of welding or the like. A terminal cap 27 forming a top plate of the sealing assembly 17 is electrically connected to the terminal plate 23, so that the terminal cap 27 serves as a positive electrode terminal. The negative electrode lead 21 is connected to an inner surface of the bottom portion 68 of the metallic exterior housing can 16 by means of welding or the like, so that the exterior housing can 16 serves as a negative electrode terminal.

In the example illustrated in FIG. 1, the positive electrode lead 20 is electrically connected to an intermediate portion such as a center portion of the positive electrode current collector in the winding direction, and the negative electrode lead 21 is electrically connected to a winding finish side end portion of the negative electrode current collector in the winding direction. However, in another structure, the positive electrode may be electrically connected to the terminal cap. Specifically, one side end portions of a plurality of positive electrode leads may be joined to the positive electrode current collector at intervals in the winding direction of the positive electrode current collector, and the other side end portions of the plurality of positive electrode leads may be joined to the terminal plate electrically connected to the terminal cap. Alternatively, an upper end portion of the positive electrode current collector in the width direction may extend toward the upper side so that the extended upper end portion may be joined to a current collector plate electrically connected to the terminal cap by means of welding or the like.

The negative electrode lead may be electrically connected to a winding start side end portion of the negative electrode current collector in the winding direction. Alternatively, the electrode assembly may have two negative electrode leads so that one of the negative electrode leads is electrically connected to the winding start side end portion of the negative electrode current collector in the winding direction, and the other of the negative electrode leads is electrically connected to the winding finish side end portion of the negative electrode current collector in the winding direction. Alternatively, the winding finish side end portion of the negative electrode current collector in the winding direction may be brought into contact with the inner surface of the exterior housing can so that the negative electrode is electrically connected to the exterior housing can. Alternatively, a configuration may be adopted in which the negative electrode lead is electrically connected to the winding start side end portion of the negative electrode current collector in the winding direction and the winding finish side end portion of the negative electrode current collector in the winding direction contacts the inner surface of the exterior housing can. Alternatively, a lower end portion of the negative electrode current collector in the width direction may extend so that the extended lower end portion is joined to a current collector plate electrically connected to the bottom portion of the exterior housing can by means of welding or the like.

The battery 10 further comprises a gasket 28 disposed between the exterior housing can 16 and the sealing assembly 17. The gasket 28 is formed of a material having insulating properties, such as a resin. The sealing assembly 17 is fixed by crimping to an opening portion of the exterior housing can 16 via the gasket 28. Thus, the battery 10 is sealed. The gasket 28 is held between the exterior housing can 16 and the sealing assembly 17 to insulate the sealing assembly 17 from the exterior housing can 16. The gasket 28 functions as a sealing member for maintaining the airtightness of the interior of the battery and functions as an insulating member insulating the sealing assembly 17 from the exterior housing can 16.

The exterior housing can 16 houses the electrode assembly 14 and the non-aqueous electrolyte, and has a cylindrical portion 30, and the bottom portion 68, and the cylindrical portion 30 includes a shoulder portion 38 and a grooved portion 34. The grooved portion 34 can be formed by, for example, annularly recessing a part of a cylindrical portion of the exterior housing can 16 to the radially inward side by spinning radially inward. The shoulder portion 38 is formed by bending an upper end portion of the exterior housing can 16 inward toward a circumferential edge portion 45 of the sealing assembly 17 when the sealing assembly 17 is fixed by crimping to the exterior housing can 16.

The sealing assembly 17 has a structure in which the terminal plate 23 and the terminal cap 27 are stacked. The terminal plate 23 and the terminal cap 27 are axially held by the gasket 28 by means of the above-described crimping, and are electrically connected to each other. A radially outer circumferential edge portion of the terminal plate 23 and a radially outer circumferential edge portion of the terminal cap 27 are preferably joined by means of welding or the like. The sealing assembly 17 has no safety vent. The terminal cap 27 having no discharge hole functions as a sealing plate that seals an opening of the exterior housing can 16. The terminal plate 23 is formed into an annular shape and has a through hole 23a in a radial center portion.

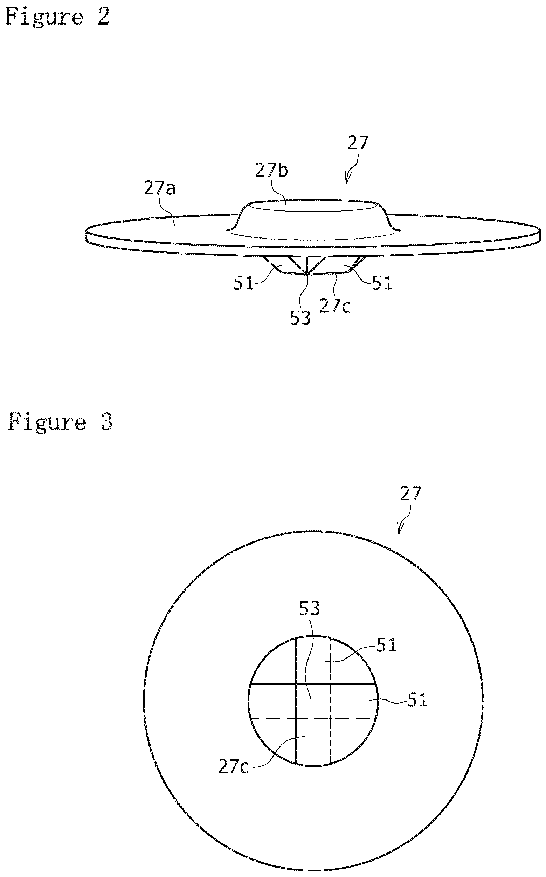

Hereinafter, a structure of the terminal cap 27 will be described in detail with reference to FIGS. 1 to 4. FIG. 2 is a perspective view of the terminal cap 27 when viewed from obliquely from the upper side. FIG. 3 is a plan view of the terminal cap 27 when viewed from the lower side in an axial direction. As illustrated in FIGS. 1 and 2, the terminal cap 27 comprises a disk portion 27a, a substantially columnar projection 27b, and a tapered portion 27c. The projection 27b projects axially upward from the radial center portion of the disk portion 27a. The projection 27b has a solid structure, and as a result, the rigidity of the terminal cap 27 is improved.

The tapered portion 27c projects toward the electrode assembly 14 side from the lower surface of the disk portion 27a, and is tapered toward the hollow portion 14a of the electrode assembly 14. The tapered portion 27c is preferably tapered toward a center axis of the exterior housing can 16. The tip 53 of the tapered portion 27c is located closer to the electrode assembly 14 than the terminal plate 23 in the sealing assembly 17. In a case where the other components such as the terminal plate 23 are thus stacked on the lower surface of the terminal cap 17, the tapered portion 27c is formed so that the tip 53 is located closer to the electrode assembly 14 in the axial direction than the other portions in the sealing assembly 17. The sealing assembly 17 may be formed only by the terminal cap 17. As illustrated in FIG. 2, the tapered portion 27c is formed by a plurality of rib-shaped protrusions 51 arranged along a circumferential direction. In the example illustrated in FIG. 2, four rib-shaped protrusions 51 are arranged at substantially equal intervals in the circumferential direction.

As illustrated in FIGS. 2 and 3, the protrusions 51 each have a rectangular inclined surface, and are connected to each other by the tip 53 of the tapered portion 27c. The tip 53 of the tapered portion 27c forms a square end surface. FIG. 1 is a sectional view including a circumferential center of each of the two protrusions 51. As illustrated in FIG. 1, the tip 53 of the tapered portion 27c faces the hollow portion 14a of the electrode assembly 14 in the axial direction. The positive electrode lead 20 extends from the electrode assembly 14 to the terminal plate 23, passing over the hollow portion 14a. The terminal plate 23 is located radially more outward than the tapered portion 27c. The upper insulating plate 18 has a through hole 18a in a radial center. The entire hollow portion 14a overlaps with the through hole 18a in the axial direction.

The bottom portion 68 of the exterior housing can 16 has a thin easily rupturable portion 70, and the easily rupturable portion 70 is formed by a circular-shaped groove in plan view when viewed from the lower side in the axial direction. A portion surrounded by the circular-shaped easily rupturable portion 70 in the bottom portion 68 forms a safety vent 73. The battery 10 has the safety vent 73 only in the bottom portion 68 of the exterior housing can 16. The entire hollow portion 14a of the electrode assembly 14 is located radially more inward than the easily rupturable portion 70. Note that the easily rupturable portion may be formed by a groove having a shape other than a circular shape in plan view, and may be formed by, for example, a C-shaped groove in plan view.

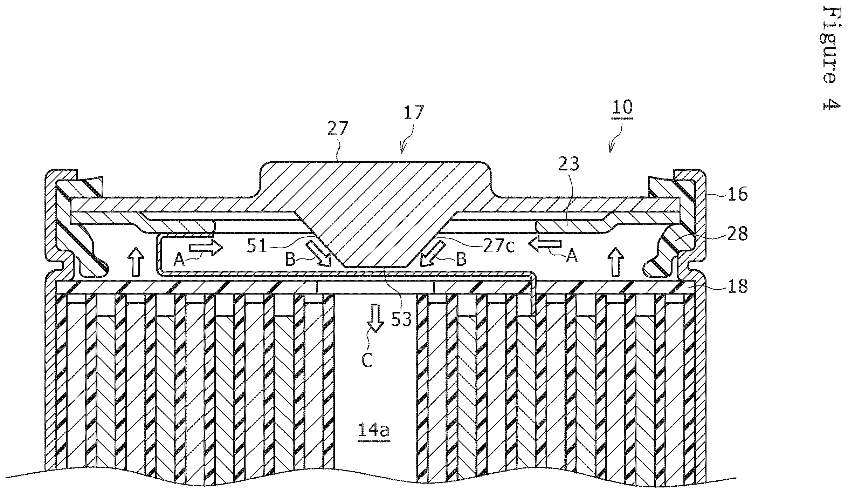

FIG. 4 is an enlarged sectional view of an upper end portion in the axial direction in FIG. 1. In the cylindrical battery 10, the terminal cap 27 has the tapered portion 27c that projects toward the electrode assembly 14 side and is tapered toward the hollow portion 14a of the electrode assembly 14. The tip 53 of the tapered portion 27c is located closer to the electrode assembly 14 in the axial direction than a portion other than the tapered portion 27c in the sealing assembly 17.

Accordingly, when heat is abnormally generated in the cylindrical battery 10, high-temperature gas discharged axially upward from the upper end surface of the electrode assembly 14 flows radially inward as indicated by an arrow A in FIG. 4 along the lower surface of the sealing assembly 17, and then, is rectified toward the hollow portion 14a in a direction indicated by an arrow B along the tapered portion 27. Then, after the gas flows downward in the hollow portion 14a as indicated by an arrow C, the gas is smoothly guided to the easily rupturable portion 70.

As described above, since the gas discharged axially upward from the upper end surface of the electrode assembly 14 is rectified and is smoothly guided to the easily rupturable portion 70, the easily rupturable portion 70 is appropriately ruptured, so that the gas is discharged to the outside of the battery. In this way, the safety vent operates smoothly, so that high safety of the cylindrical battery 10 is secured.
Since the terminal cap 27 has the tapered portion 27c projecting downward, the rigidity of the terminal cap 27 can be increased and the deflection of the terminal cap 27 can also be reduced. Therefore, from this standpoint as well, the gas discharged axially upward from the upper end surface of the electrode assembly 14 is smoothly guided to the easily rupturable portion 70, so that the easily rupturable portion 70 can be further appropriately ruptured.

Furthermore, the entire tip 53 of the tapered portion 27c faces the hollow portion 14a in the axial direction, so that the gas discharged axially upward from the upper end surface of the electrode assembly 14 is guided to the hollow portion 14a more efficiently. Therefore, the easily rupturable portion 70 can be further appropriately ruptured.

In the present embodiment, the number of protrusions 51 arranged along the circumferential direction is 4, but when the number of protrusions 51 arranged along the circumferential direction is greater than or equal to 3, the gas flowing radially inward can be easily guided to the hollow portion 14a side by the tapered portion 27c. When the number of protrusions 51 arranged along the circumferential direction is greater than or equal to 3, the rigidity of the tapered portion 27c can be sufficiently high, which can efficiently reduce the deformation of the terminal cap 27.

When the number of protrusions 51 arranged along the circumferential direction is less than or equal to 6, the tapered portion 27c can be processed easily. The plurality of rib-shaped protrusions 51 each have a rectangular inclined surface, so that the gas discharged axially upward from the upper end surface of the electrode assembly 14 is efficiently guided to the hollow portion 14a. The tapered portion 27c is formed so that the tip 53 connecting the plurality of rib-shaped protrusions 51 to each other has a regular polygonal shape, whereby the rigidity of the terminal cap 27 can be increased.

The present disclosure is not limited to the above-described embodiment and modified examples, and various improvements and changes are possible within the matters described in the claims of the present application and the equivalent scope thereof.

In the above-described embodiment, the terminal cap 27 comprises the disk portion 27a, the solid projection 27b, and the tapered portion 27c. However, the projection may include the cylindrical portion extending upward from an inner edge of the disk portion and a closure portion that closes an upper opening of the cylindrical portion. In this case, the tapered portion is formed to project downward from an inner surface of the closure portion. In the above-described embodiment, the entire tip 53 of the tapered portion 27c faces the hollow portion 14a in the axial direction. Alternatively, only a part of the tip of the tapered portion may face the hollow portion in the axial direction.

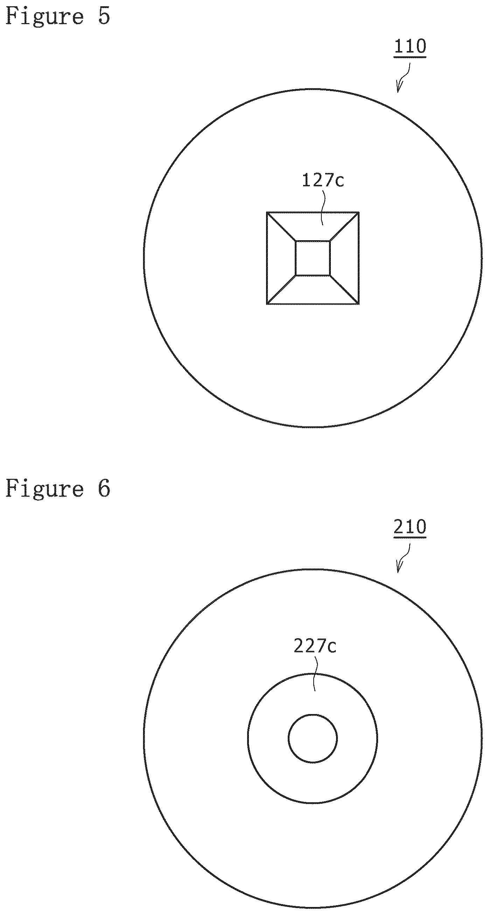

The tapered portion is not limited to the shape formed by the plurality of rib-shaped protrusions. For example, as illustrated in FIG. 5, that is, a plan view corresponding to FIG. 3 in a cylindrical battery 110 of a first modified example, a tapered portion 127c may have a truncated square pyramidal shape. For example, the tapered portion may have the other truncated pyramidal shape such as a truncated pentagonal pyramidal shape or a truncated hexagonal pyramidal shape, and as illustrated in FIG. 6, that is, a plan view corresponding to FIG. 3 in a cylindrical battery 210 of a second modified example, for example, a tapered portion 227c may have a truncated conical shape.

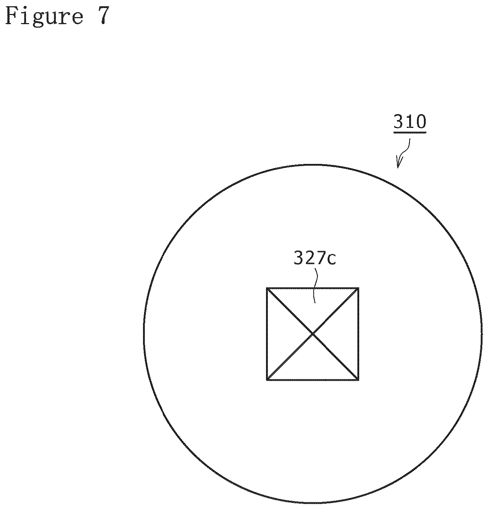

As illustrated in FIG. 7, that is, a plan view corresponding to FIG. 3 in a cylindrical battery 310 of a third modified example, for example, a tapered portion 327c may have a shape in which a tip is formed by one point or square pyramidal shape. Alternatively, the tapered portion may have the other pyramidal shape such as a pentagonal pyramidal shape or a hexagonal pyramidal shape, or a frusto-conical shape. Alternatively, the tapered portion may be formed by a part of a sphere, may be formed by, for example, a hemisphere.

When the tapered portion has a tapered structure in which a side surface exists around its entire circumference, such as a truncated pyramidal shape, a truncated conical shape, a pyramidal shape, a frusto-conical shape, or a hemisphere, and is tapered toward the hollow portion of the electrode assembly, the gas flowing radially inward is rectified smoothly on the hollow portion 14a side in all the directions of the peripheral direction of the tapered portions 27c, and is smoothly guided to the hollow portion 14a side. Therefore, the gas flows to the easily rupturable portion efficiently and smoothly, so that the easily rupturable portion can be appropriately ruptured.

### REFERENCE SIGNS LIST

10, 110, 210, 310 Cylindrical battery, 11 Positive electrode, 12 Negative electrode, 13 Separator, 14 Electrode assembly, 14a Hollow portion, 16 Exterior housing can, 17 Sealing assembly, 18 Upper insulating plate, 18a First through hole, 19 Lower insulating plate, 20 Positive electrode lead, 21 Negative electrode lead, 23 Terminal plate, 23a Through hole, 27 Terminal cap, 27a Disk portion, 27b Projection, 27c, 127c, 227c, 327c Tapered portion, 28 Gasket, 30 Cylindrical portion, 34 Grooved portion, 38 Shoulder portion, 45 Circumferential edge portion, 51 Protrusion, 53 Tip, 68 Bottom portion, 70 Easily rupturable portion, 73 Safety vent

## Claims

1. A cylindrical battery, comprising:
an electrode assembly in which a positive electrode and a negative electrode are wound with a separator interposed between the positive electrode and the negative electrode;
a bottomed cylindrical exterior housing can that houses the electrode assembly; and
a sealing assembly that is fixed by crimping to an opening portion of the exterior housing can via a gasket, wherein
the exterior housing can has a thin easily rupturable portion provided in a bottom portion,
the sealing assembly has a terminal cap that seals an opening of the exterior housing can,
the terminal cap has a tapered portion that projects toward the electrode assembly side and is tapered toward a hollow portion of the electrode assembly, and
a tip of the tapered portion is located closer to the electrode assembly than a portion other than the tapered portion in the sealing assembly.

2. The cylindrical battery according to claim 1, wherein
the tip of the tapered portion faces the hollow portion in an axial direction.

3. The cylindrical battery according to claim 1 or 2, wherein
the tapered portion is formed by a plurality of rib-shaped protrusions arranged along a circumferential direction.

4. The cylindrical battery according to claim 3, wherein
the tapered portion is formed by the three or more rib-shaped protrusions.

5. The cylindrical battery according to claim 1 or 2, wherein
the tapered portion has a frusto-conical shape or a truncated conical shape.
